# EUROPÄISCHE PATENTSCHRIFT

(11) **EP 2 664 897 B1**
(45) Veröffentlichungstag und Bekanntmachung des Hinweises auf die Patenterteilung: **02.07.2014**
(21) Anmeldenummer: 12168329.6
(22) Anmeldetag: 16.05.2012
(51) Int. Cl.: G01D 5/14, G01D 5/347

(54) **Drehgeber und Verfahren zur Bestimmung einer Winkelstellung**
Rotary encoder and method for determining an angle
Encodeur et procédé destinés à la détermination d'une position angulaire

(43) Veröffentlichungstag der Anmeldung: 20.11.2013
(73) Patentinhaber: SICK STEGMANN GmbH, 78166 Donaueschingen (DE)
(72) Erfinder: Hopp, David, 78166 Donaueschingen (DE)
(74) Vertreter: Hehl, Ulrich

(56) Entgegenhaltungen:
- EP-A2- 0 319 172
- EP-A2- 2 275 790
- EP-B1- 0 619 011
- WO-A1-2004/029556
- WO-A2-2011/085968
- DE-A1- 19 520 299
- US-B1- 6 603 713

## Beschreibung

Die Erfindung betrifft einen Drehgeber und ein Verfahren zur Bestimmung einer Winkelstellung zweier relativ zueinander drehbeweglicher Objekte nach dem Oberbegriff von Anspruch 1 beziehungsweise 13.

Drehgeber oder Drehwinkelsensoren dienen der Erfassung eines Drehwinkels beispielsweise einer Welle. Dabei wird jeweils eine Maßverkörperung abgetastet, die üblicherweise an der Welle mitdrehend angebracht und deren Winkelstellung somit gesucht ist. Die Maßverkörperung erzeugt über die Relativbewegung eine Intensitätsmodulation, die als Winkelsignal genutzt wird.

Ein bekanntes Wirkprinzip nutzt in einem magnetischen Drehgeber den Hall-Effekt, indem die Drehbewegung eines Permanentmagneten beziehungsweise von dessen Magnetfeld mit einem Hallsensor detektiert wird. Wird ein einfacher Hallsensor von einem Strom durchflossen und in ein senkrecht dazu verlaufendes Magnetfeld gebracht, liefert er eine Ausgangsspannung, die proportional zum Produkt aus magnetischer Feldstärke und Strom ist. Ein Hallsensor erzeugt auch dann ein Signal, wenn das Magnetfeld konstant bleibt. Es existieren unterschiedliche Bauformen von Hallsensoren, so dass die Detektion des Magnetfelds tangential oder stirnseitig zur Drehbewegung erfolgen kann. Die Drehung des Magnetfeldes kann dabei als Ganzes oder partiell erfasst werden.

Optische Drehgeber verwenden eine Codescheibe, die das Signal eines Lichtsenders moduliert, so dass ein in Transmission oder Reflexion angeordneter Lichtempfänger ein Winkelsignal empfängt.

Mit Hilfe des Faraday-Effektes besteht die Möglichkeit, die magnetische Flussdichte beziehungsweise das Magnetfeld optisch sichtbar zu machen. Innerhalb eines magnetooptischen Materials, also eines geeigneten transparenten dielektrischen Materials oder einer entsprechenden transparenten Flüssigkeit, beeinflusst ein Magnetfeld die Polarisationsrichtung von Licht. Strahlt man demnach polarisiertes Licht in ein magnetooptisches Material ein und wandelt das transmittierte oder reflektierte Licht in einem polarisationsempfindlichen Detektor in ein Empfangssignal, so ist dieses Empfangssignal in Abhängigkeit von der Orientierung eines Magnetfeldes moduliert, in dem sich das magnetooptische Material befindet. Auch eine solche Anordnung, die als magnetooptischer Sensor (MOS) bezeichnet wird, ist für die Erfassung einer Drehstellung eines mit der Welle mitdrehenden Magneten geeignet, und das Empfangssignal ist dann ein Winkelsignal, aus dem anhand der Modulation die Drehstellung bestimmt werden kann.

Es besteht eine steigende Nachfrage nach Drehwinkelsensoren, die besondere Sicherheitsanforderungen erfüllen. In der Sicherheitstechnik werden strenge Bedingungen an die Zuverlässigkeit und Ausfallsicherheit von Sensoren gestellt, um beispielsweise in bestimmten Klassen (SIL, Safety Integrity Level) von Sicherheitsnormen wie der EN 61508 zugelassen zu werden. Typische Sicherheitsfunktionen sind Notausschaltungen, Abschalten überhitzter Geräte oder die Überwachung gefährlicher Bewegungen. Bei Geräten, die diese Anforderungen erfüllen sollen, muss gewährleistet sein, dass auch bei einem geringfügigen Defekt, beispielsweise eines Sensorsystems, das Gerät weiterhin die erforderlichen Messungen durchführen kann. Eine dieser Anforderungen der besonders strengen Sicherheitsklasse SIL3 bezieht sich auf die Redundanz und Diversität der Drehgeber, was bedeutet, dass mehr als ein Sensorsystem in dem Drehgeber verfügbar ist (Redundanz) und diese mehreren Sensorsysteme idealerweise nicht das gleiche Messprinzip verwenden (Diversität). Dadurch wird sichergestellt, dass bei Ausfall eines Sensorsystems der Drehgeber weiterhin funktionsfähig ist und somit den geforderten Sicherheitsstandards genügt.

Im Idealfall werden daher in einem sicheren Drehgeber zwei unterschiedliche physikalische Wirkprinzipien verwendet. Dies kann immer durch den Parallelbetrieb zweier komplett unabhängiger, unterschiedlicher Systeme in einem gemeinsamen Gehäuse erreicht werden, beispielsweise eines optischen und eines magnetischen Drehgebers. Dabei werden aber mindestens eine Maßverkörperung und ein Signalaufnehmer je Wirkprinzip benötigt, so dass das Gesamtsystem aufwändig, baugroß und kostenintensiv wird.

Das Signal eines Hallsensors ist temperaturabhängig und kann ein Offset haben. Weitere Abhängigkeiten bestehen gegenüber mechanischen Einbautoleranzen des Magneten sowie dessen Magnetisierung. Für den Einsatz in einem Drehgeber ist daher eine Kalibrierung oder das Hinterlegen einer Korrekturtabelle erforderlich. Dies geschieht nach der Herstellung mit Hilfe eines hochaufgelösten Referenzgebers. Im Betrieb können die genannten Fehlereinflüsse aber nicht mehr aktiv erkannt und korrigiert werden. Deshalb ist ein System aus einem Hallsensor nicht zuverlässig genug. Ein System aus mehreren Hallsensoren könnte zwar die gleiche gemeinsame Maßverkörperung nutzen und wäre redundant, aber wegen der genannten Fehlerquellen dennoch nicht sicher im Sinne der Sicherheitsnorm und ohnehin nicht diversitär.

Eine andere bekannte Möglichkeit besteht darin, eine gemeinsame Codescheibe mit mehreren optischen Leseköpfen abzutasten. Auch ein solches System bleibt lediglich redundant und wird durch den zusätzlichen Lesekopf nicht diversitär. Denn die beiden optischen Leseköpfe unterliegen aufgrund ihres identischen physikalischen Wirkprinzips einer Anfälligkeit gegenüber den gleichen Störeinflüssen, so dass immer noch eine erhöhte Ausfallgefahr besteht.

Aus der DE 33 41 265 C2 ist ein Füllstandsmesser bekannt, der auf einem Schwimmer basiert. Die Position des Schwimmers wird anhand eines darin angeordneten Permanentmagneten erkannt und auf einer Skala angezeigt, welche den Permanentmagnet mit Hilfe von magnetooptischen Substanzen unter Ausnutzung des Faraday-Effekts lokalisiert. Diese Anordnung ist aber weder für einen Winkelsensor gedacht noch geeignet.

Die EP 2 275 790 A2 beschreibt einen integrierten Polarisationssensor, bei dem Filterschichten zur Polarisation von einfallendem Licht beispielsweise in einem CMOS-Prozess auf einem Detektorchip aufgebracht werden. Diese Filterschichten können auch mehrere matrixartig angeordnete, räumlich voneinander separierte Teilbereiche mit jeweils unterschiedlicher Polarisationsrichtung aufweisen, so dass gleichzeitig Licht in mehreren Polarisationsrichtungen erfasst und ausgewertet werden kann. Die Anwendung eines derartigen integrierten Polarisationssensors für einen magnetooptischen Sensor wird aber in der EP 2 275 790 A2 nicht diskutiert.

Die EP 0 319 172 A2 offenbart einen optischen Positionssensor für die Steuerung eines Flugzeugs auf Basis eines magnetooptischen Elements. In verschiedenen Ausführungsformen von Encodern wird die durch Faraday-Elemente bewirkte Polarisationsänderung linear polarisierten Lichts nach Transmission oder Reflexion detektiert. Zwar nutzt die EP 0 319 172 A2 den magnetooptischen Effekt, um gegenüber an dem Sensor entstehendem Tau während des Steigflugs unempfindlich zu werden. Ein sicherer Encoder im Sinne einschlägiger Normen entsteht damit aber nicht, weil nur ein einziger Sensor mit demselben Messprinzip verwendet wird.

In einem Drehgeschwindigkeitssensor gemäß EP 0 619 011 B1 weist ein magnetooptisches Material Bereiche auf, die Licht in Abhängigkeit des Magnetfeldes eines mitgedrehten Magneten unterschiedlich beugen. Die Drehstellung wird dann aus der Energieverteilung des transmittierten Lichts bestimmt. Auch dieser Sensor nutzt nur ein einziges Messprinzip und ist damit kein sicherer Sensor.

Die DE 195 20 299 A1 offenbart eine Einrichtung zu Lageerkennung mit einem optischen Sensorsystem und einem Magnet-Hallsystem. Die Ausgangssignale der beiden nach unterschiedlichen physikalischen Prinzipien arbeitenden Sensorsysteme werden gemeinsam ausgewertet.

Die WO 2004/029556 A1 beschreibt eine Dreh- oder Kippwinkelerfassungseinrichtung für ein Kugelgelenk mit einem Permanentmagneten und einer magnetooptischen Platte. Eine Bilderfassungseinrichtung erfasst an der magnetooptischen Platte reflektiertes Licht, um Informationen über das Magnetfeld zu erhalten und daraus die gesuchte relative Lage von Gelenkkugel und Kugelschale des Kugelgelenks zu berechnen.

Die WO 2011/085968 beschreibt einen Drehwinkelsensor gemäß den Stand der Technik.

Es ist daher Aufgabe der Erfindung, einen sicheren Drehgeber mit einem vereinfachten Aufbau anzugeben.

Diese Aufgabe wird durch einen Drehgeber und ein Verfahren zur Bestimmung einer Winkelstellung zweier relativ zueinander drehbeweglicher Objekte nach Anspruch 1 beziehungsweise 13 gelöst. Dabei geht die Erfindung von dem Grundgedanken aus, ein erstes Winkelsignal mit einem herkömmlichen Magnetsensor zu erfassen und dessen magnetische Maßverkörperung ein weiteres Mal für ein physikalisch gänzlich anderes Messverfahren zu nutzen. Dazu wird statt eines weiteren magnetischen Sensors ein magnetooptischer Sensor eingesetzt, der ein zweites Winkelsignal erzeugt. Für die Erzeugung beider Winkelsignale kann ein und dieselbe Maßverkörperung verwendet werden. Damit entsteht ein sicherer Drehgeber, wobei der Begriff "sicher" in diesem Zusammenhang bedeutet, dass einschlägige Sicherheitsnormen erfüllt sind.

Die Erfindung hat den Vorteil, dass zwei diversitär-redundante Messprinzipien in einem sicheren Drehgeber vereinigt sind, die mit der gleichen Maßverkörperung arbeiten können. Beide Messverfahren sind berührungslos und daher verschleißarm. Wegen der Doppelverwendung der Maßverkörperung benötigt das System wenig Bauraum.

Der zusätzliche magnetooptische Sensor kann sehr einfach in bestehende Drehgeber auf Basis von magnetischen Sensoren integriert werden, ohne deren bisherige Funktionsweise zu verändern.

Vorzugsweise ist das erste Objekt eine Welle und das zweite Objekt ein Körper oder ein Gehäuse des Drehgebers. Das ist eine übliche Montage eines Drehgebers, bei dem die Winkelstellung einer Bewegung der Welle relativ zu dem Drehgeber erfasst wird. Als Maßverkörperung wird bevorzugt ein Permanentmagnet eingesetzt. Sowohl das erste Winkelsignal des Magnetsensors als auch das zweite Winkelsignal des magnetooptischen Sensors wird somit von dem gleichen mitdrehenden Magneten moduliert.

Der magnetooptischer Sensor weist bevorzugt ein magnetooptisches Substrat, eine Lichtquelle mit einem ersten Polarisator zum Beleuchten des Substrats mit polarisiertem Licht und einen polarisationsempfindlichen Lichtempfänger mit einem zweiten Polarisator zur Erzeugung des zweiten Winkelsignals auf. Beispielsweise wird das Sendelicht der Lichtquelle in dem ersten Polarisator linear polarisiert. Die Polarisationsrichtung wird auf dem Lichtweg innerhalb des magnetooptischen Substrats abhängig von der Orientierung des Magnetfeldes der Maßverkörperung geändert. Der Grad der Polarisationsdrehung hängt außerdem von Material und Schichtdicke des magnetooptischen Substrats ab, aber dies sind innerhalb des gleichen Drehgebers Konstanten. Somit wird das Empfangssignal des polarisationsempfindlichen Lichtempfängers von dem relativ in Drehbewegung befindlichen Magnetfeld der Maßverkörperung moduliert, um das zweite Winkelsignal zu erzeugen.

Das magnetooptische Material ist bevorzugt auf einer spiegelnden Rückseite des Magnetsensors vorgesehen. Der magnetooptische Sensor arbeitet somit in Reflexion, nicht in Transmission. Die Schichtdicke des magnetooptischen Substrats wird für einen grö-ßeren Effekt doppelt durchlaufen. Ein magnetooptisches Substrat kann in Form einer Beschichtung auf eine spiegelnde Fläche aufgebracht werden und ist so als Chip erhältlich.

Der Drehgeber weist bevorzugt eine gemeinsame Halbleiterplate auf, auf deren einer Seite der Magnetsensor und auf deren anderer Seite das magnetoopische Material angeordnet ist. Dies ermöglicht einen besonders kompakten Aufbau. Die gemeinsame Halbleiterplatte unterteilt den Drehgeber auch räumlich entsprechend der beiden Messverfahren, so dass sich der magnetische und der magnetooptische Sensor nicht gegenseitig stören.

Der polarisationsempfindliche Lichtempfänger ist bevorzugt ein integrierter Detektorchip mit einer Polarisationsschicht als zweitem Polarisator. Somit wird kein zusätzliches Bauteil benötigt, um eine polarisationsabhängige Modulation und damit die Ausgabe des zweiten Winkelsignals zu ermöglichen.

Der polarisationsempfindliche Lichtempfänger weist bevorzugt eine Zeile oder eine Matrix mit einer Vielzahl von Lichtempfangselementen auf, wobei der zweite Polarisator mehrere Bereiche mit unterschiedlichen Polarisationseigenschaften aufweist. Dies kann in Form mehrerer separater Polariatoren, aber auch durch unterschiedliche Teilbereiche in demselben zweiten Polarisator umgesetzt werden, insbesondere unterschiedliche Teilflächen oder Bereiche der Polarisationsschicht. Verschiedene Pixel oder Gruppen von Pixeln können so mehrerer Polarisationsrichtungen parallel detektieren. Damit lässt sich die Genauigkeit beziehungsweise die Empfindlichkeit des magnetooptischen Sensors steigern.

Der polarisationsempfindliche Lichtempfänger weist bevorzugt mehrere separate Einzellichtempfänger auf. Dies ermöglicht zusätzliche Gestaltungsmöglichkeiten, weil die Position der Lichtempfänger gegenüber einem einzigen Lichtempfänger variabler wählbar ist.

Der erste Polarisator und der zweite Polarisator sind bevorzugt als ein gemeinsamer Polarisator ausgebildet. Damit wird durch eine Doppelfunktion ein Bauelement eingespart. Diese Ausführungsform eignet sich besonders im Zusammenhang mit separaten Einzellichtempfängern, setzt dies aber nicht zwingend voraus.

Das magnetooptische Substrat weist bevorzugt mehrere separate Gruppen von Lichtempfangselementen oder separaten Einzellichtempfängern zugeordnete Teilbereiche auf. Damit können die mit dem magnetooptischen Substrat zu versehenden Flächen verringert werden.

Der Magnetsensor ist bevorzugt ein Hall-Sensor oder ein Wiegand-Sensor. Beides sind bewährte magnetische Prinzipien für einen Drehgeber, so dass hinsichtlich des einen der beiden diversitären Messprinzipien auf eine Vielzahl bewährter Konstruktionen und Ausgestaltungen zurückgegriffen werden kann.

Der Drehgeber weist bevorzugt eine Auswertungseinheit auf, die dafür ausgebildet ist, aus dem ersten Winkelsignal und aus dem zweiten Winkelsignal die Winkelstellung zu bestimmen. Dabei wird das jeweilige modulierte Signal ausgewertet und aus dessen Amplitude auf eine Winkelstellung geschlossen. Vorzugsweise sind entsprechende Vergleichswerte zu bestimmten Winkeln eingelernt. So kann sowohl aus dem ersten Winkelsignal als auch aus dem zweiten Winkelsignal jeweils unabhängig eine Drehstellung bestimmt werden.

Die Auswertungseinheit ist bevorzugt dafür ausgebildet, eine aus dem ersten Winkelsignal erzeugte Winkelstellung und eine aus dem zweitem Winkelsignal erzeugte Winkelstellung zu vergleichen und bei Abweichungen jenseits einer Toleranz ein Warnsignal auszugeben, insbesondere ein sicherheitsgerichtetes Abschaltsignal. Die beiden Winkelstellungen können auch lediglich ausgegeben werden, wobei die Interpretation nachgelagerten Einheiten überlassen bleibt. Denkbar ist auch, nur aus dem ersten Winkelsignal beziehungsweise dem zweiten Winkelsignal mit der geforderten Ausgaberate eine Winkelstellung zu berechnen und das jeweils andere Winkelsignal nur in grö-ßeren Abständen zur Überprüfung heranzuziehen. Schließlich ist auch möglich, die beiden Winkelstellungen miteinander zu verrechnen, etwa durch direkte oder gewichtete Mittelung.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Ausführungsform eines Drehgebers mit magnetischem und magnetooptischem Messprinzip;
- Fig. 2: eine Blockdarstellung des Drehgebers gemäß Figur 1;
- Fig. 3: eine weitere Ausführungsform eines Drehgebers mit zwei separaten Abtastpunkten einer magnetooptischen Messung; und
- Fig. 4: eine weitere Ausführungsform eines Drehgebers mit nur einem einzigen gemeinsamen Polarisator der magnetooptischen Messung.

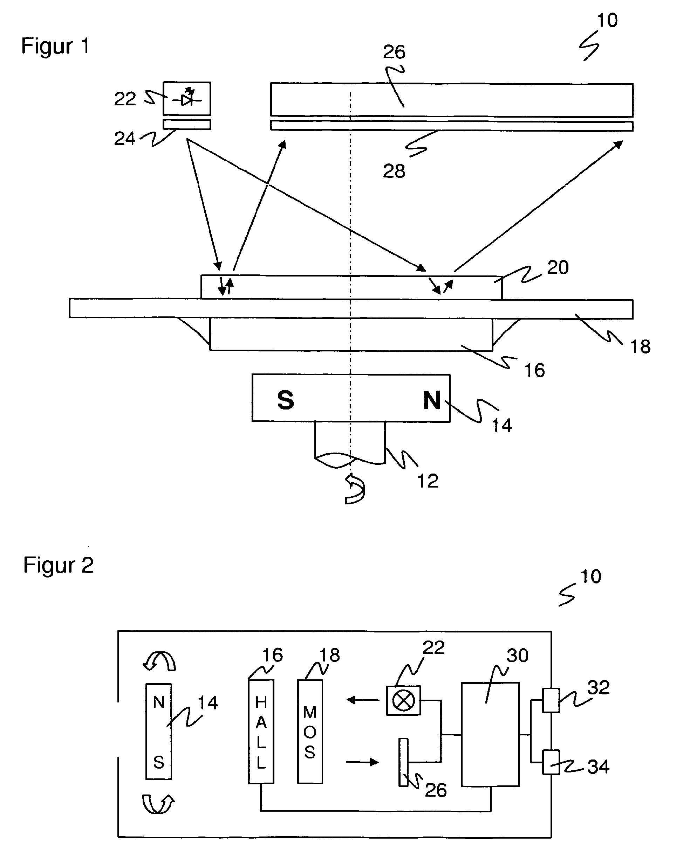

Figur 1 zeigt eine schematische Schnittdarstellung eines Drehgebers 10. Dieser Drehgeber 10 ist aufgrund der Verwendung zweier diversitär-redundanter Messprinzipien insbesondere ein sicherer Drehgeber im Sinne von Sicherheitsnormen wie der EN 61508.

Auf einer Welle 12 ist eine magnetische Maßverkörperung 14 beispielsweise in Form eines mitdrehenden Permanentmagneten gelagert. Die weiteren Elemente außer der Welle 12 und der Maßverkörperung 14 befinden sich relativ zu dem Drehgeber 10 in Ruhe, vollziehen also eine Drehbewegung der Welle 12 nicht mit. Axial über der Maßverkörperung 14 ist ein Hall-Sensor 16 als Beispiel für einen magnetischen Sensor auf einer Leiterplatte 18 angeordnet. Die dem Hall-Sensor 16 abgewandte Rückseite der Leiterplatte 18 ist verspiegelt und mit einer Beschichtung aus einem magnetooptischen Material 20 versehen.

Nochmals in axialer Richtung oberhalb befindet sich in einer weiteren Ebene, beispielsweise auf einer zweiten Leiterplatte, ein Lichtsender 22 mit einem vorgeordneten linearen Polarisator 24. Alternativ erzeugt der Lichtsender 22 unmittelbar selbst linear polarisiertes Licht. Neben dem Lichtsender 22 vorzugsweise in der gleichen Ebene ist ein Lichtempfänger 26 vorgesehen, der durch einen vorgeordneten linearen Polarisator 28 polarisationsempfindlich ausgebildet ist. Sowohl dem Lichtsender 22 als auch dem Lichtempfänger 26 können weitere, nicht dargestellte Optiken zur Strahlformung und -bündelung zugeordnet sein. Der polarisierte Lichtsender 22, 24, das magnetooptische Material 20 und der polarisationsempfindliche Lichtempfänger 26, 28 bilden gemeinsam einen magnetooptischen Sensor.

Wenn die Welle 12 rotiert, vollzieht die magnetische Maßverkörperung 14 die Drehbewegung mit, so dass ein drehendes Magnetfeld entsteht. Der Hall-Sensor 16 detektiert das Magnetfeld, und aufgrund von dessen Drehbewegung wird das Signal des Hall-Sensors 16 moduliert. Das elektrische Ausgangssignal des Hall-Sensors 16 ist demnach ein erstes Winkelsignal.

Das polarisierte Licht des Lichtsenders 22 strahlt flächig auf das magnetooptische Material 20 und transmittiert dieses zweifach, nämlich einmal auf dem Hinweg und einmal nach Reflexion an der verspiegelten Rückseite der Leiterplatte 18. Das Magnetfeld der Maßverkörperung sorgt aufgrund des Faraday-Effekts oder des magnetooptischen Effekts dafür, dass auf dem Lichtweg durch das magnetooptische Material die Polarisationsrichtung des Lichts verändert wird. Die Polarisationsänderung ist abhängig von der Orientierung des Magnetfeldes, die sich wiederum wegen der Drehbewegung der Maß verkörperung in Abhängigkeit von der Winkelstellung der Welle 12 periodisch verändert. Das reflektierte Licht wird in dem polarisationsempfindlichen Lichtempfänger 26 detektiert, und die Intensität des auf den Lichtempfänger 26 fallenden Lichts ist wegen der periodischen Polarisationsänderungen moduliert. Somit ist das elektrische Ausgangssignal des Lichtempfängers ein zweites Winkelsignal.

Demnach wird ein erstes Winkelsignal mit einem magnetischen Sensor 16 und das zweite Winkelsignal diversitär-redundant mit einem magnetooptischen Sensor 22, 20, 26 erzeugt. Obwohl die beiden physikalischen Wirkprinzipien grundverschieden sind, kann die gleiche Maßverkörperung 14 verwendet werden.

Figur 2 zeigt den Drehgeber 10 noch einmal ein einer Blockdarstellung. Hier und im Folgenden bezeichnen gleiche Bezugszeichen die gleichen oder einander entsprechenden Merkmale. In dem Drehgeber 10 ist eine Auswertungseinheit 30 vorgesehen, welche zugleich die Steuerungsfunktionen in dem Drehgeber 10 übernimmt und mit dem Hall-Sensor 16, dem Lichtsender 22 und dem Lichtempfänger 26 verbunden ist. Auf diese Weise erhält die Auswertungseinheit 30 das erste Winkelsignal und das zweite Winkelsignal und berechnet daraus Winkelstellungen der Welle 12.

Dabei sind verschiedene Auswertungsverfahren denkbar. Beispielsweise kann die Auswertungseinheit 30 zweimal unabhängig die Winkelstellung berechnen und über einen Drehwinkelausgang 32 ausgeben. Ebenso sind gegenseitige Verrechnungen, beispielsweise Mittelungen, oder Plausibilisierungen möglich. In einer sicherheitstechnischen Anwendung vergleicht die Auswertungseinheit 30 die Winkelstellungen, die aus dem ersten Winkelsignal und dem zweiten Winkelsignal resultieren, und gibt bei fehlender Übereinstimmung ein sicherheitsgerichtetes Abschaltsignal über einen sicheren Ausgang 34 aus (OSSD, Output Signal Switching Device). Ein derartiges Abschaltssignal wird auch dann ausgegeben, wenn ein Selbsttest einer kritischen Funktion scheitert, beispielsweise eines der beiden Winkelsignale gänzlich ausbleibt oder zu große Störungen für eine verlässliche Auswertung aufweist.

Durch den Einsatz der beiden räumlich getrennten Systeme, also des Hall-Sensors 16 einerseits und des magnetooptischen Sensors 22, 20, 26 andererseits, können externe Magnetfelder, die aus Sicht des Drehgebers 10 Störquellen sind, anhand von Signalabweichungen oder Differenzen in den beiden Winkelsignalen erkannt werden. Damit lässt sich eine Überwachung der Signalqualität und somit erneut der Sensorfunktion implementieren.

Als Lichtempfänger 26 kommt zunächst ein beliebiger Photodetektor in Betracht, beispielsweise eine Photodiode oder eine CCD- oder CMOS-Matrix oder -Zeile. Bevorzugt wird aber ein integrierter Detektorchip verwendet, mit dem das benötigte linear polarisierende Element 24 integriert ist. Gerade mit einem solchen integrierten Detektorchip können besonders einfach auch mehrere Polarisationsrichtungen parallel erfasst werden, indem die linear polarisierenden Strukturen in räumlich separierte kleine Flächen mit unterschiedlichen Polarisationsrichtungen unterteilt werden. Dies ermöglicht eine erhöhte Messgenauigkeit.

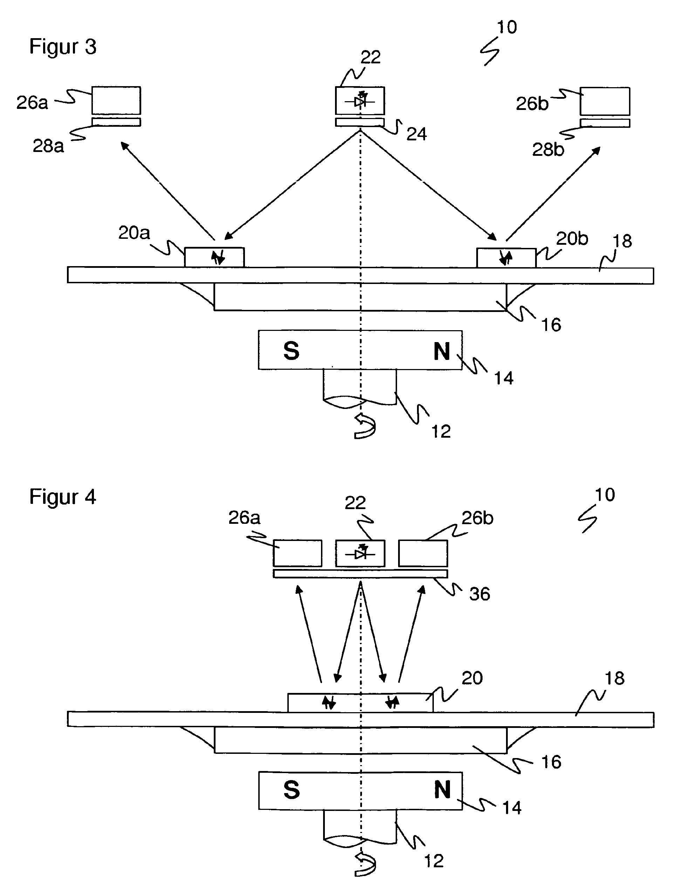

Anstelle eines flächigen, pixelbasierten Lichtempfängers 26 können auch diskrete einzelne Lichtempfänger 26a-b in Form herkömmlicher Photodioden mit vorgelagerten Polarisatoren 28a-b verwendet werden. Eine solche Ausführungsform eines Drehgebers 10 ist in Figur 3 in einer schematischen Schnittdarstellung gezeigt. Dabei kann der Lichtsender 22 mittig auf der Verlängerung der Drehachse der Welle 12 positioniert werden, was den Vorteil einer symmetrischen Anordnung mit sich bringt. In einer bevorzugten Ausführungsform werden vier einzelne Lichtempfänger 26a-b unter Winkeln von jeweils 90° bezüglich der Achse verwendet, von denen wegen der Schnittdarstellung in Figur 3 nur zwei zu sehen sind. Damit kann eine hohe Messgenauigkeit und eine Eindeutigkeit des Winkelsignals über 360° gewährleistet werden. Eine abweichende Anzahl von einzelnen Lichtempfängern 26a-b, insbesondere eine höhere Anzahl zur Steigerung der Messgenauigkeit ist aber von der Erfindung gleichermaßen umfasst.

Entsprechend den separaten einzelnen Lichtempfängern 26a-b kann auch das magnetooptische Material 20 in Form separierter, lokaler Chips angebracht sein. Dies ist ebenfalls in Figur 3 dargestellt, und dabei sinkt der Flächen- und Materialbedarf für das magnetooptische Material 20.

Werden separate einzelne Lichtempfänger 22 eingesetzt, so ermöglicht dies auch Anordnungen, in dem die Polarisatoren 24, 28 durch einen gemeinsamen Polarisator 36 ersetzt werden, welcher gleichzeitig für die Beleuchtung und für die Erfassung verwendet wird. Ein Beispiel für eine derartige Anordnung ist in Figur 4 in einer weiteren schematischen Schnittdarstellung einer Ausführungsform eines Drehgebers 10 gezeigt. Prinzipiell ist auch denkbar, bei Ausführungsformen mit einem einheitlichen, pixelbasierten Lichtempfänger 22 mit nur einem Polarisator 36 auszukommen. Dazu muss aber entweder auf die zentrale Anordnung des Lichtsenders 22 verzichtet werden, oder es muss eine Öffnung für das Sendelicht geschaffen werden, etwa durch einen ringförmigen Lichtempfänger 26.

Die Erfindung wurde bisher am Beispiel von sogenannten Single-Turn-Drehgebern beschrieben, deren Eindeutigkeitsbereich also maximal eine volle Umdrehung oder 360° beträgt. Eine Erweiterung auf Multi-Turn-Geber ist aber ohne Weiteres möglich. Beispielsweise wird dazu die Anzahl voller Umdrehungen elektronisch gezählt. Da dies aber relativ anfällig etwa gegenüber einem Verlust des Zählerstandes ist, wird vorzugsweise die Maßverkörperung 14 mit zusätzlichen Magnetfeldern ausgestattet, um eine mächtigere Codierung zu ermöglichen. Entsprechend können zusätzliche HallSensoren hinzugefügt werden, um diese Codierung zu lesen. Die verschiedenen Magnetfelder können jeweils einzeln oder als flächiges Bild detektiert werden. Für die flächige Auswertung mehrerer Magnetfelder in dem magnetooptischen Sensor 22, 20, 26 kann ein digitaler Bildverarbeitungsalgorithmus in der Auswertungseinheit 30 zum Einsatz kommen. Derartige Bildverarbeitungsalgorithmen können aber auch schon für die Auswertung des zweiten Winkelsignals bei nur einem einfachen rotierenden Magneten als Maßverkörperung 14 genutzt werden.

Die Maßverkörperung 14 kann nicht nur für Multi-Turn-Anwendungen kompliziertere Magnetisierungen aufweisen, als ein einfacher Permanentmagnet. Durch unterschiedliche axiale, diametrale, segmentweise oder anders strukturierte Magnetisierungen kann eine Vielfalt von inkrementalen oder absoluten Signalen erzeugt werden.

Die Genauigkeit beziehungsweise Auflösung der Erfassung durch den magnetooptischen Sensor 22, 20, 26 kann noch durch eine verbesserte Pixelauflösung oder zusätzliche Polarisationserkennung aufgrund von Teilbereichen des Polarisators 28 gesteigert werden. Die Erkennung der Winkelstellung aufgrund des magnetooptischen Effekts ist damit auch ohne den Aspekt der diversitär-redundanten Messung äußerst nützlich und prinzipiell auch alleine, also ohne zusätzliche Verwendung des Hall-Sensors 16 oder eines anderen weiteren Sensors zur Ermittlung von Drehwinkeln geeignet.

## Patentansprüche

1. Drehgeber (10) zur Bestimmung einer Winkelstellung zweier relativ zueinander drehbeweglicher Objekte (10, 12), der eine drehfest mit dem ersten Objekt (12) verbundene magnetische Maßverkörperung (14) und einen drehfest mit dem zweiten Objekt (10) verbundenen Magnetsensor (16) zur Erzeugung eines ersten Winkelsignais in Abhängigkeit von der Drehstellung der Maßverkörperung (14) aufweist,
**dadurch gekennzeichnet,**
**dass** der Drehgeber (10) einen drehfest mit dem zweiten Objekt (10) verbundenen magnetooptischen Sensor (22, 20, 26) mit einem magnetooptischen Substrat (20) zur Erzeugung eines zweiten Winkelsignals in Abhängigkeit von der Drehstellung der Maßverkörperung (14) aufweist und dass das magnetooptische Substrat (20) auf einer spiegelnden Rückseite des Magnetsensors (16) vorgesehen ist.

2. Drehgeber (10) nach Anspruch 1,
wobei das erste Objekt (12) eine Welle, das zweite Objekt ein Körper oder ein Gehäuse des Drehgebers (10) und/oder die Maßverkörperung (14) ein Permanentmagnet ist.

3. Drehgeber (10) nach Anspruch 1 oder 2,
wobei der magnetooptischer Sensor (22, 20, 26) eine Lichtquelle (22) mit einem ersten Polarisator (24) zum Beleuchten des magnetooptischen Substrats (20) mit polarisiertem Licht und einen polarisationsempfindlichen Lichtempfänger (26, 28) mit einem zweiten Polarisator (28) zur Erzeugung des zweiten Winkelsignals aufweist.

4. Drehgeber (10) nach einem der vorhergenden Ansprüche,
der eine gemeinsame Halbleiterplatte (18) aufweist, auf deren einer Seite der Magnetsensor (16) und auf deren anderer Seite das magnetoopische Substrat (20) angeordnet ist.

5. Drehgeber (10) nach einem der Ansprüche 3 oder 4,
wobei der polarisationsempfindliche Lichtempfänger (26, 28) ein integrierter Detektorchip mit einer Polarisationsschicht als zweitem Polarisator (28) ist.

6. Drehgeber (10) nach einem der Ansprüche 3 bis 5,
wobei der polarisationsempfindliche Lichtempfänger (26, 28) eine Zeile oder eine Matrix mit einer Vielzahl von Lichtempfangselementen aufweist, und wobei der zweite Polarisator (28) mehrere Bereiche mit unterschiedlichen Polarisationseigenschaften aufweist.

7. Drehgeber (10) nach einem der Ansprüche 3 bis 5,
wobei der polarisationsempfindliche Lichtempfänger (26, 28) mehrere separate Einzellichtempfänger (26a-b, 28a-b) aufweist und/oder wobei der erste Polarisator (24) und der zweite Polarisator (28) als ein gemeinsamer Polarisator (36) ausgebildet sind.

8. Drehgeber (10) nach einem der Ansprüche 3 bis 7,
wobei das magnetooptische Substrat (20) mehrere separate, Gruppen von Lichtempfangselementen oder separaten Einzellichtempfängern zugeordnete Teilbereiche aufweist.

9. Drehgeber (10) nach einem der vorhergehende Ansprüche,
wobei der Magnetsensor (16) ein Hall-Sensor oder ein Wiegand-Sensor ist.

10. Drehgeber (10) nach einem der vorhergehende Ansprüche,
der eine Auswertungseinheit (30) aufweist, die dafür ausgebildet ist, aus dem ersten Winkelsignal und aus dem zweiten Winkelsignal die Winkelstellung zu bestimmen.

11. Drehgeber (10) nach Anspruch 10,
wobei die Auswertungseinheit (30) dafür ausgebildet ist, eine aus dem ersten Winkelsignal erzeugte Winkelstellung und eine aus dem zweitem Winkelsignal erzeugte Winkelstellung zu vergleichen und bei Abweichungen jenseits einer Toleranz ein Warnsignal auszugeben, insbesondere ein sicherheitsgerichtetes Abschaltsignal.

12. Verfahren zur Bestimmung einer Winkelstellung zwischen zwei relativ zueinander drehbeweglichen Objekten (10, 12), bei dem sich eine magnetische Maßverkörperung (14) drehfest mit dem ersten Objekt (12) bewegt und ein drehfest mit dem zweiten Objekt (10) verbundener Magnetsensor (16) ein erstes Winkelsignal in Abhängigkeit von der Drehstellung der Maßverkörperung (14) erzeugt, **dadurch gekennzeichnet,**
**dass** ein drehfest mit dem zweiten Objekt (10) verbundener magnetooptischer Sensor (22, 20, 26) mit einem magnetooptischen Substrat (20) ein zweites Winkelsignal in Abhängigkeit von der Drehstellung der Maßverkörperung (4) erzeug, indem polarisiertes Licht auf das auf einer spiegelnden Rückseite des Magnetsensors (16) vorgesehene magnetooptische Substrat (20) gestrahlt und das reflektierte Licht detektiert wird.

13. Verfahren nach Anspruch 12,
wobei in dem magnetooptischen Sensor (20, 22, 26) das magnetooptische Substrat (20) mit polarisiertem Licht beleuchtet wird und das zweite Winkelsignal ein elektrisches Signal ist, das aus Licht erzeugt wird, welches von dem Substrat (20) transmittiert oder reflektiert wird und welches aufgrund der Polarisationsänderung in Abhängigkeit von einer Relativdrehung der magnetischen Maßverkörperung (14) moduliert ist.

14. Verfahren nach Anspruch 12 oder 13,
wobei die Winkelstellung aus dem ersten Winkelsignal und dem zweiten Winkelsignal bestimmt wird, und wobei insbesondere eine aus dem ersten Winkelsignal bestimmte Winkelstellung und eine aus dem zweitem Winkelsignal bestimmte Winkelstellung verglichen und bei Abweichungen jenseits einer Toleranz ein Warnsignal oder ein sicherheitsgerichtetes Abschaltsignal ausgegeben wird.

## Claims

1. A rotary encoder (10) for determining an angular position of two objects (10, 12) being rotationally movable relative to one another, the rotary encoder (10) comprising a magnetic measuring scale (14) attached to the first object (12) in a rotationally fixed manner and a magnetic sensor (16) attached to the second object (10) in a rotationally fixed manner for generating a first angle signal in dependence on the rotational position of the measuring scale (14),
**characterized in that**
the rotary encoder (10) comprises a magneto-optical sensor (22, 20, 26) with a magneto-optical substrate (20) attached to the second object (10) in a rotationally fixed manner for generating a second angle signal in dependence on the rotational position of the measuring scale (14), and **in that** the magneto-optical substrate (20) is provided on a reflective rear side of the magnet sensor (16).

2. The rotary encoder (10) according to claim 1,
wherein the first object (12) is a shaft, the second object is a body or a housing of the rotary encoder (10) and/or the measurement scale (14) is a permanent magnet.

3. The rotary encoder (10) according to claim 1 or 2,
wherein the magneto-optical sensor (22, 20 26) comprises a light source (22) with a first polarizer (24) for illuminating the magneto-optical substrate (20) with polarized light and a polarization-sensitive light receiver (26, 28) with a second polarizer (28) for generating the second angle signal.

4. The rotary encoder (10) according to any one of the preceding claims, comprising a common semiconductor board (18) where the magnetic sensor (16) is arranged on the one side and the magneto-optical substrate (20) is arranged on the other side.

5. The rotary encoder (10) according to claim 3 or 4,
wherein the polarization-sensitive light receiver (26, 28) is an integrated detector chip with a polarization layer as the second polarizer (28).

6. The rotary encoder (10) according to any one of claims 3 to 5,
wherein the polarization-sensitive light receiver (26, 28) comprises a line or a matrix with a plurality of light reception elements, and wherein the second polarizer (28) comprises several regions with different polarization properties.

7. The rotary encoder (10) according to any one of claims 3 to 5,
wherein the polarization-sensitive light receiver (26, 28) comprises a plurality of separate individual light receivers (26a-b, 28a-b) and/or wherein the first polarizer (24) and the second polarizer (28) are formed as a common polarizer (36).

8. The rotary encoder (10) according to any of claims 3 to 7,
wherein the magneto-optical substrate (20) comprises a plurality of separate partial regions corresponding to groups of light reception elements or separate individual light receivers.

9. The rotary encoder (10) according to any one of the preceding claims,
wherein the magnetic sensor (16) is a Hall sensor or a Wiegand sensor.

10. The rotary encoder (10) according to any one of the preceding claims, comprising an evaluation unit (30) which is configured to determine the angular position from the first angle signal and from the second angle signal.

11. The rotary encoder (10) according to claim 10,
wherein the evaluation unit (30) is configured to compare an angular position generated from the first angle signal and an angular position generated from the second angle signal, and to output a warning signal, in particular a safety-related shutdown signal, in case of deviations beyond a tolerance.

12. A method for determining an angular position of two objects (10, 12) being rotationally movable relative to one another, wherein a magnetic measurement scale (14) moves in a rotationally fixed manner with the first object (12) and a magnetic sensor (16) being attached to the second object (10) in a rotationally fixed manner generates a first angle signal in dependence on the angular position of the measurement scale (14),
**characterized in that**
a magneto-optical sensor (22, 20, 26) with a magneto-optical substrate (20) attached to the second object (10) in a rotationally fixed manner generates a second angle signal in dependence on the angular position of the measurement scale (14) by radiating polarized light onto the magneto-optical substrate (20) which is provided on a reflective rear side of the magnet sensor (16) and detecting the reflected light.

13. The method according to claim 12,
wherein in the magneto-optical sensor (20, 22, 26) the magneto-optical substrate (20) is illuminated with polarized light, and wherein the second angle signal is an electrical signal which is generated from light which is transmitted or reflected by the substrate (20) and which is modulated due to the polarization variation in dependence on a relative rotation of the magnetic scale (14).

14. The method according to claim 12 or 13,
wherein the angular position is determined from the first angle signal and the second angle signal, and wherein in particular an angular position determined from the first angle signal and an angular position determined from the second angle signal are compared, and wherein upon deviations beyond a tolerance a warning signal or a safety-related shutdown signal is generated.

## Revendications

1. Codeur rotatif (10) pour déterminer une position angulaire de deux objets (10, 12) mobiles en rotation l'un par rapport à l'autre, qui comprend une mesure matérialisée magnétique (14) reliée solidairement en rotation avec le premier objet (12) et un capteur magnétique (16) relié solidairement en rotation avec le second objet (10) pour engendrer un premier signal angulaire en fonction de la position en rotation de la mesure matérialisée (14),
**caractérisé en ce que**
le codeur rotatif (10) comprend un capteur magnéto-optique (22, 20, 26) relié solidairement en rotation avec le second objet (10), avec un substrat magnéto-optique (20) pour engendrer un second signal angulaire en fonction de la position en rotation de la mesure matérialisée (14), et **en ce que** le substrat magnéto-optique (20) est prévu sur une face postérieure spécularisée du capteur magnétique (16).

2. Codeur rotatif (10) selon la revendication 1,
dans lequel le premier objet (12) est un arbre, le second objet est un corps ou un boîtier du codeur rotatif (10) et/ou la mesure matérialisée (14) est un aimant permanent.

3. Codeur rotatif (10) selon la revendication 1 ou 2,
dans lequel le capteur magnéto-optique (22, 20, 26) comprend une source de lumière (22) avec un premier polariseur (24) pour éclairer le substrat magnéto-optique (20) avec de la lumière polarisée, et un récepteur de lumière (26, 28) sensible à la polarisation comprenant un second polariseur (28) pour engendrer le second signal angulaire.

4. Codeur rotatif (10) selon l'une des revendications précédentes,
qui comprend une plaque semiconductrice commune (18), telle que le capteur magnétique (16) est agencé sur un côté de celle-ci et le substrat magnéto-optique (20) est agencé sur son autre côté.

5. Codeur rotatif (10) selon l'une des revendications 3 ou 4,
dans lequel le récepteur de lumière (26, 28) sensible à la polarisation est une puce détectrice intégrée avec une couche de polarisation à titre de second polariseur (28).

6. Codeur rotatif (10) selon l'une des revendications 3 à 5,
dans lequel le récepteur de lumière (26, 28) sensible à la polarisation comprend une ligne ou une matrice avec une pluralité d'éléments récepteurs de lumière, et dans lequel le second polariseur (28) comprend plusieurs zones avec des propriétés de polarisation différentes.

7. Codeur rotatif (10) selon l'une des revendications 3 à 5,
dans lequel le récepteur de lumière (26, 28) sensible à la polarisation comprend plusieurs récepteurs de lumière individuels (26a-b, 28a-b) et/ou dans lequel le premier polariseur (24) et le second polariseur (28) sont réalisés comme un polariseur commun (36).

8. Codeur rotatif (10) selon l'une des revendications 3 à 7,
dans lequel le substrat magnéto-optique (20) comprend plusieurs groupes séparés d'éléments récepteurs de lumière ou des zones partielles associées à des récepteurs de lumière individuels séparés.

9. Codeur rotatif (10) selon l'une des revendications précédentes,
dans lequel le capteur magnétique (16) est un capteur de Hall ou un capteur de Wiegand.

10. Codeur rotatif (10) selon l'une des revendications précédentes,
qui comprend une unité d'évaluation (30) qui est réalisée pour déterminer la position angulaire à partir du premier signal angulaire et à partir du second signal angulaire.

11. Codeur rotatif (10) selon la revendication 10,
dans lequel l'unité d'évaluation (30) est réalisée pour comparer une position angulaire engendrée à partir du premier signal angulaire et une position angulaire engendrée à partir du second signal angulaire et, en cas d'écarts au-delà d'une tolérance, pour délivrer un signal d'avertissement, en particulier un signal de coupure à vocation de sécurité.

12. Procédé pour déterminer une position angulaire entre deux objets (10, 12) mobiles en rotation l'un par rapport à l'autre, dans lequel une mesure matérialisée (14) se déplace solidairement en rotation avec le premier objet (12) et un capteur magnétique (16) relié solidairement en rotation avec le second objet (10) engendre un premier signal angulaire en fonction de la position en rotation de la mesure matérialisée (14),
**caractérisé en ce que**
un capteur magnéto-optique (22, 20, 26) avec un substrat magnéto-optique (20), relié solidairement en rotation avec le second objet (10), engendre un second signal angulaire en fonction de la position en rotation de la mesure matérialisée (14), en émettant une lumière polarisée sur le substrat (20) magnéto-optique prévu sur une face postérieure spécularisée du capteur magnétique (16) et en détectant la lumière réfléchie.

13. Procédé selon la revendication 12,
dans lequel, dans le capteur magnéto-optique (20, 22, 26), le substrat magnéto-optique (20) est éclairé avec une lumière polarisée et le second signal angulaire est un signal électrique qui est engendré à partir de la lumière qui est transmise ou réfléchie par le substrat (20) et qui est modulée en raison de la variation de polarisation en fonction d'une rotation relative de la mesure matérialisée (14) magnétique.

14. Procédé selon la revendication 12 ou 13,
dans lequel la position angulaire est déterminée à partir du premier signal angulaire et du second signal angulaire et dans lequel en particulier une position angulaire déterminée à partir du premier signal angulaire et une position angulaire déterminée à partir du second signal angulaire sont comparées, et en cas d'écarts au-delà d'une tolérance, on délivre un signal d'avertissement ou un signal de coupure à vocation de sécurité.
